# EUROPEAN PATENT APPLICATION

(11) **EP 4 613 421 A1**
(43) Date of publication of application: **10.09.2025**
(21) Application number: 23885472.3
(22) Date of filing: 10.10.2023
(51) Int. Cl.: B23Q 7/00, B23K 26/00, B23K 26/38

(54) **TRANSPORT CONTROL SYSTEM, AND DETERMINING METHOD**

(30) Priority: 04.11.2022 JP 2022177226
(71) Applicant: Murata Machinery, Ltd., Kyoto-shi, Kyoto 601-8326 (JP)
(72) Inventor: KOMURO, Hideo, Inuyama-shi, Aichi 484-8502 (JP)
(74) Representative: Weickmann & Weickmann PartmbB
(86) International application number: PCT/JP2023/036693
(87) International publication number: WO 2024/095709

(57) **Abstract**

[Problem] To provide a transport control system and a normality determination method capable of suppressing a decline in machining efficiency.

[Means to Solve Problem] Provided is a transport control system 8 comprising an imager 31 that captures an image of a pallet 6 on which machined workpieces, cut and separated by a machining tool 1, are placed, and a processor 32 that determines a presence or absence of an abnormality based a captured image captured by the imager 31, wherein the processor 32 acquires the captured image including a product Wa and a remaining material Wb as the machining target workpieces from the imager 31, and determines an abnormality if a position of one of the machining target workpieces in the captured image deviates from its proper position.

## Description

### Technical Field

The present invention relates to a transport control system and a determination method.

### Background Art

It is known that so-called jointless processing, where a product is cut out from a material placed on a pallet by a machining tool without any connection to the remaining material, is employed (see Patent Literature 1). This jointless processing enables elimination of the need for manual removal to separate the product from the remaining material. As a subsequent process to jointless processing, takeout of the product from the pallet and discharge of the remaining material can be performed using a transporter or the like, enabling automation of the series of operations from the machining to the takeout of the products and the discharge of the remaining material.

### Citation List

### Patent Literature

[Patent Literature 1] Japanese Patent No. 4847269

### Summary of Invention

### Technical Problem

In jointless processing, since the product and the remaining material are completely separated, the state (for example, the position) of the product and the remaining material on the pallet may change due to vibrations or other factors during the movement of the pallet after machining. This variation in condition may affect the takeout of the product and the discharge of the remaining material. For example, if the state of the product or remaining material on the pallet changes from its normal state (that is, the state in which it should be), the attitude of the product or remaining material may change, or the product and remaining material may overlap, making it impossible to extract the product or remaining material, and thus preventing appropriate takeout of the product and discharge of the remaining material by a transporter or the like. If the takeout of the product and the discharge of the remaining material are not performed appropriately, it will be necessary to stop the machining tool and the transporter or the like to remove the cause, which would lead to a decline in machining efficiency. Patent Literature 1 does not disclose or suggest the condition of both the product and the remaining material on the pallet, and therefore, it is not possible to suppress the decline in machining efficiency as mentioned above.

An object of the present invention is to provide a transport control system and a determination method capable of suppressing a decline in machining efficiency.

### Means for Solving Problem

A transport control system according to an aspect of the present invention includes an imager that captures an image of a pallet on which machining target workpieces, cut and separated by a machining tool, are placed, and a processor that determines a presence or absence of an abnormality based a captured image captured by the imager, wherein the processor acquires the captured image including a product and a remaining material as the machining target workpieces from the imager and determines an abnormality if a position of the machining target workpieces in the captured image deviates from its proper position.

A determination method according to an aspect of the present invention includes capturing an image of a pallet on which machined workpieces, cut and separated by a machining tool, are placed, and acquiring the captured image including a product and a remaining material as the machining target workpieces from the imager, and determining an abnormality if a position of one of the machining target workpieces in the captured image deviates from a proper position.

### Advantageous Effects of the Invention

According to the transport control system or the determination method of the above aspect, included are an imager that captures an image of the pallet, and a processor that determines a presence or absence of an abnormality based a captured image captured by the imager, wherein the processor acquires the captured image including a product and a remaining material, which are machining target workpieces cut and separated by the machining tool, from the imager, and determines an abnormality if a position of one of the machining target workpieces in the captured image that has been acquired deviates from a proper position. Thus, if an abnormality is determined with the product and remaining material on the pallet, it is possible to address the abnormality. It is therefore possible to suppress events where the product is not appropriately taken out or the remaining material is not properly discharged, thereby preventing a decline in machining efficiency.

In the transport control system of the above aspect, included is an extraction controller that controls an extractor that extracts the machining target workpiece on the pallet as an extraction target, and if the processor determines that a position of the extraction target deviates from the proper position, the extraction controller may change at least one of a position and attitude of the extractor during extraction of the extraction target, according to a deviation amount of the position of the extraction target. According to such a configuration, it is possible to extract an extraction target at a deviated position on the pallet.

In the transport control system of the above aspect, included is an extraction controller that controls an extractor that sequentially extracts the machining target workpieces on the pallet in accordance with an extraction order, and the extraction controller may change the extraction order if the position of the machining target workpiece deviates from the proper position. If the position of the machining target workpiece deviates from the proper position and there is an overlap of the machining target workpieces, the extraction controller may change the extraction order so that the machining target workpiece at a top of the machining target workpieces that are overlapping is extracted first. According to such a configuration, even if there is an overlap of the machining target workpieces on the pallet, it is possible to extract an extraction target.

In the transport control system of the above aspect, the extraction order of an initial stage may be defined such that the remaining material is extracted first, followed by the product, and if at least a portion of the product overlaps with the remaining material, the extraction controller may change the extraction order of the initial stage so that the product is extracted before the remaining material. According to such a configuration, even if there is an overlap of the product and the remaining material on the pallet, it is possible to extract an extraction target.

In the transport control system of the above aspect, the imager may capture an image of the pallet each time the product is extracted by the transporter, and the extraction controller may determine whether the products are overlapping each time the product is extracted, and if there is an overlap of the products, may change the extraction order so that the product at a top of the overlap is extracted first. According to such a configuration, even if there is an overlap of the products on the pallet, it is possible to extract an extraction target.

### Brief Description of the Drawings

Fig. 1 is a perspective view showing an example of a transport control system according to the present embodiment.
Fig. 2 is a plan view showing an example of the transport control system according to the present embodiment.
Fig. 3A is a diagram showing an example of a machining pallet and a lifter according to the embodiment.
Fig. 3B is a diagram showing an example of the machining pallet and the lifter according to the embodiment.
Fig. 4 is a schematic configuration diagram of a processor and an information processor according to the present embodiment.
Fig. 5 is a diagram showing an example of design positions according to the present embodiment.
Fig. 6 is a diagram for describing layout data according to the present embodiment.
Fig. 7 is a diagram showing a schematic example of a captured image captured when imaging machining target workpieces on the machining pallet according to the present embodiment.
Fig. 8 is a diagram showing an example of extraction orders according to the present embodiment.
Fig. 9 is a flowchart showing an example of an extraction process according to the present embodiment.

### Description of Embodiments

Hereinafter, the present invention will be described through an embodiment. However, the following embodiment does not limit the invention according to the claims, and not all combinations of features described in the embodiment are essential to the means by which the present invention solves the above problems. In the drawings, the same or similar members are denoted by the same reference signs, and redundant descriptions may be omitted. The shapes and sizes of elements in the drawings may be exaggerated for clarity, and the dimensions and shapes may differ from the actual product.

In the drawings, an XYZ Cartesian coordinate system is used to describe directions in each drawing. In the XYZ Cartesian coordinate system, a plane that is parallel to a horizontal plane is defined as an XY plane. A direction along this XY plane is denoted as X direction, and a direction orthogonal to the X direction is denoted as Y direction. A direction perpendicular to the XY plane is denoted as Z direction. For each of the X direction, the Y direction, and the Z direction, description is made with a definition in which a direction indicated by an arrow is the positive (+) direction and a direction opposite to the direction indicated by the arrow is the negative (-) direction.

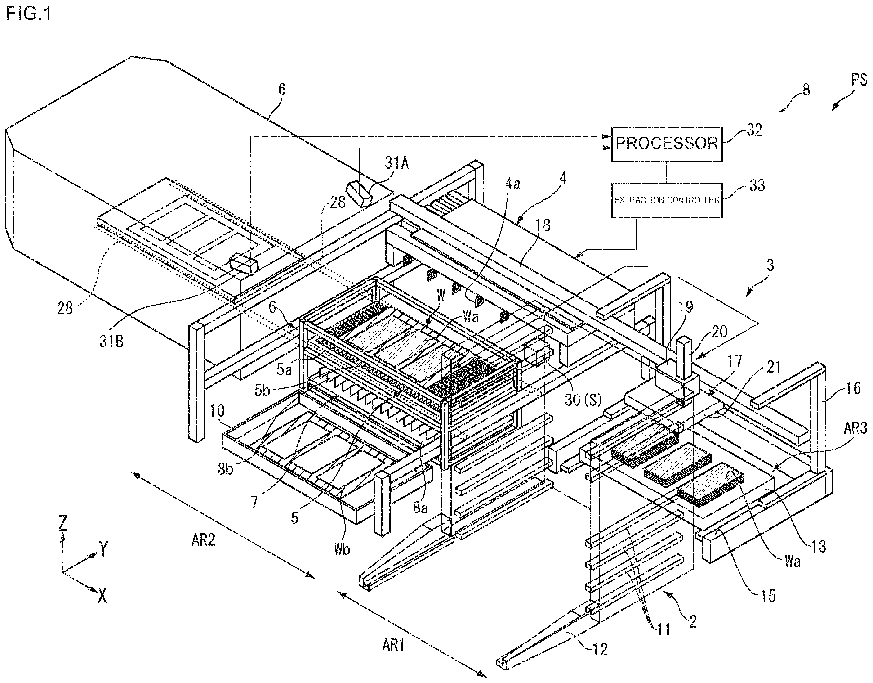

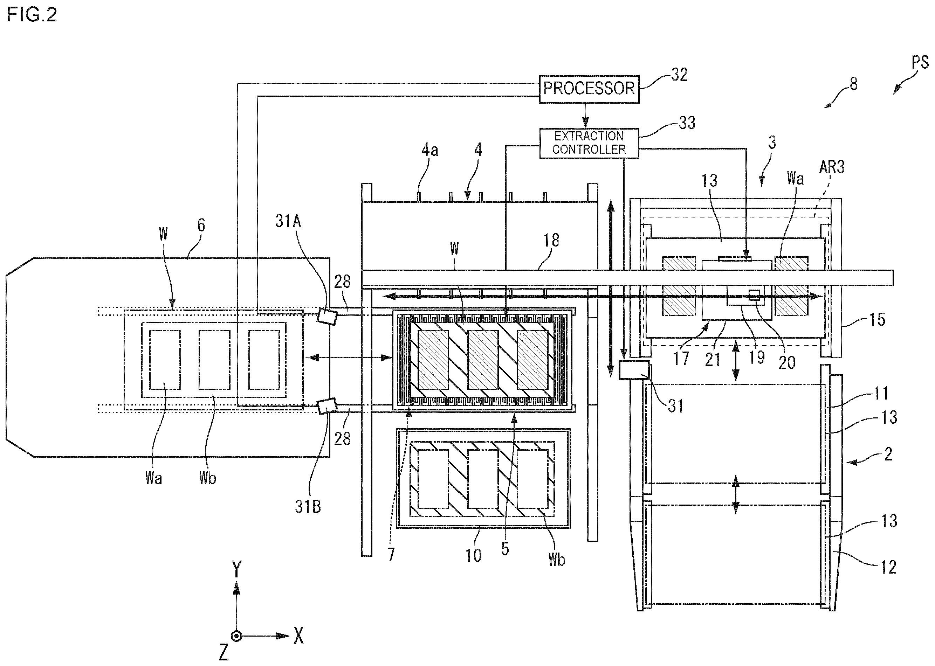

Fig. 1 is a perspective view showing an example of a transport control system 8 according to the embodiment. Fig. 2 is a plan view showing an example of the transport control system 8 according to the embodiment. In the present embodiment, the transport control system 8 is applied to a machining system PS. As shown in Fig. 1 and Fig. 2, the machining system PS includes, for example, a machining tool 1, a stocker 2, a loader 3, a gripper 4, a machining pallet 5, a pallet changer 6, a lifter 7, and a transport control system 8. Each of the loader 3 and the gripper 4 is an example of an extractor.

The machining tool 1 performs machining such as cutting on an unmachined workpiece W placed on the machining pallet 5 and separates the workpiece W into products Wa and a remaining material Wb. This process is so-called jointless processing, where there is no connection portion between the product Wa and the remaining material Wb. For example, the machining tool 1 emits a laser beam onto the unmachined workpiece W placed on the machining pallet 5, thereby cutting and separating the workpiece W on the machining pallet 5 into products Wa and a remaining material Wb. The workpiece W is, for example, a plate-shaped material. The remaining material Wb is a plate-shaped material remaining after products Wa have been cut out from the workpiece W by the machining tool 1 and may be referred to as a skeleton. For example, the remaining material Wb is a plate-shaped material that includes the peripheral portions of the workpiece W connected to each other. Each of the product Wa and the remaining material Wb is an example of a machining target workpiece. The machining tool 1 may use a method for jointless processing, which is not limited to laser machining, and methods other than laser machining may also be used.

Here, a storage area AR1 and a loading/unloading area AR2 are provided in the the machining system PS. In the storage area AR1, for example, unmachined workpieces W are stored. In the storage area AR1, machined workpieces W, that is, products Wa, are stored.

The loading/unloading area AR2 is located on the +X side of the machining tool 1. The loading/unloading area AR2 is arranged between the machining tool 1 and the storage area AR1. For example, to the loading/unloading area AR2, an unmachined workpiece W is transported from the storage area AR1. Then, the unmachined workpiece W is transported into the machining tool 1 from the loading/unloading area AR2 and is cut into products Wa and a remaining material Wb by the machining tool 1.

The stocker 2 is arranged in the storage area AR1. The stocker 2 stores unmachined workpieces W and machined products Wa. The stocker 2 includes, for example, multiple storage racks 11 and an elevator 12.

The multiple storage racks 11 are arranged, for example, in the vertical direction (Z direction). The storage rack 11 stores, for example, a material pallet (not shown in the drawings) on which multiple unmachined workpieces W are placed. The elevator 12 is raised and lowered by an elevator driver (not shown in the drawings). The elevator 12 can extract the material pallet from the storage rack 11 and raise and lower the material pallet.

A temporary placement area AR3 is provided in the storage area AR1. The temporary placement area AR3 is provided, for example, adjacent to the +Y side of the stocker 2. The stocker 2 uses the elevator 12 to place the material pallet, on which multiple unmachined workpieces W are placed, in the temporary placement area AR3.

The storage rack 11 also stores a product pallet 13 on which the products Wa are accumulated. The elevator 12 can extract the product pallet 13 from storage rack 11 and raise and lower the product pallet 13. The stocker 2 arranges the product pallet 13 in the temporary placement area AR3. The loader 3 places the products Wa on the product pallet 13 arranged in the temporary placement area AR3. The stocker 2 transfers the product pallet 13 on which the products Wa are placed from the temporary placement area AR3 to the storage rack 11.

The loader 3 transports an unmachined workpiece W or products Wa. For example, the loader 3 transports an unmachined workpiece W from the temporary placement area AR3 to the loading/unloading area AR2 and places it on the machining pallet 5 placed in the loading/unloading area AR2. The loader 3 performs a product unloading process for the products Wa from the machining pallet 5. For example, in the product unloading process, the loader 3 extracts products Wa from the machining pallet 5 placed in the loading/unloading area AR2 and transfers the extracted products Wa to the machining pallet 13 in the temporary placement area AR3. The loader 3 includes, for example, Y-direction rails 15, a traveling carrier 16 capable of traveling on the Y-direction rails 15, and a transferer 17 provided on the traveling carrier 16.

The Y-direction rails 15 extend in a direction (Y direction) intersecting the moving direction (X direction) of the machining pallet 5. On an upper part of the traveling carrier 16 there is provided an X-direction rail 18 extending in the X direction. The transferer 17 is attached to the X rail 18.

The transferer 17 includes an X-direction moving body 19 that can move along the X-direction rail **18, a Z-**direction moving body 20 provided on the X-direction moving body **19,** and an adherer 21 provided at a lower end of the Z-direction moving body **20.** The X-direction rail 18 is provided over the temporary placement area AR3 and the loading/unloading area AR2. The X-direction moving body 19 is movable between the temporary placement area AR3 and the loading/unloading area AR2. The Z-direction moving body 20 is movable in the vertical direction (up-down direction). The adherer 21 is moved in the Y direction by the traveling carrier 16, in the X direction by the X-direction moving body 19, and in the vertical direction by the Z-direction moving body 20. The adherer 21 can adhere to and hold an unmachined workpiece W or products Wa.

In the product unloading process for products Wa, the loader 3 may either extract multiple products Wa collectively from the machining pallet 5 or extract each product Wa individually. In the product unloading process for products Wa, the loader 3 may either transfer multiple products Wa extracted from the machining pallet 5 to the machining pallet 13 collectively or transfer each product Wa to the product pallet 13 individually. When two or more types of products Wa are formed from a single workpiece W, the loader 3 may sort the products Wa by type and transfer each type of product Wa to the product pallet 13.

The gripper 4 is arranged above the machining pallet 5 on the +X side of the machining tool 1. The gripper 4 is movable in the Y direction and can be retracted from above the machining pallet 5. Fig. 1 and Fig. 2 show a configuration in which the gripper 4 is retracted to the +Y side of the machining pallet 5, however, the gripper 4 may also be retracted to the -Y side of the machining pallet 5.

The gripper 4 removes the remaining material Wb placed on the machining pallet 5 from the machining pallet 5. The gripper 4 includes multiple graspers 4a that grasp the +Y side and the -Y side of the remaining material Wb. The multiple graspers 4a are aligned in the X direction and are provided so as to be capable of ascending and descending. The gripper 4 holds and removes the remaining material Wb from the machining target workpieces lifted by the lifter 7 using the graspers 4a.

For example, before the products Wa are extracted from the machining pallet 5 by the loader 3, the remaining material Wb is removed from the machining pallet 5. However, the invention is not limited to this configuration, and the gripper 4 may, for example, remove the remaining material Wb from the machining pallet 5 after the products Wa have been extracted from the machining pallet 5 by the loader 3. The gripper 4 may perform a remaining material discharge process to discharge the remaining material Wb to a remaining material collector 10 after removing the remaining material Wb from the machining pallet 5. The remaining material collector 10 is arranged on the -Y side of the machining pallet 5 retracted from the machining tool 1.

For example, when removing the remaining material Wb from the machining pallet 5, the gripper 4 is positioned so that the multiple graspers 4a are arranged above and in the vicinity of the outer periphery of the machined workpiece W. In this state, the multiple graspers 4a descend to grasp the remaining material Wb, and then ascend to lift the remaining material Wb from the workpiece W. The gripper 4 moves to the -Y side and to above the remaining material collector 10 (see Fig. 1) while grasping the remaining material Wb with the graspers 4a. By releasing the grasping of the multiple graspers 4a, the remaining material Wb falls and is discharged into the remaining material collector 10. In other words, the remaining material collector 10 is arranged below the range in which the gripper 4 can move and collects the remaining material Wb discharged by the gripper 4.

The machining pallet 5 is capable of moving into and out of the machining tool 1 with the workpiece W placed thereon. The machining pallet 5 has wheels movable along rails 28. The rails 28 extend from the machining tool 1 to the pallet changer 6. The machining pallet 5 supports an unmachined workpiece W. The machining pallet 5 supports the machining target workpieces including the products Wa and the remaining material Wb cut and separated from the workpiece W by the machining tool 1. The machining pallet 5 transports the unmachined workpiece W or the machining target workpieces between the loading/unloading area AR2 and the machining tool 1.

The machining pallet 5 has, for example, a rectangular shape when viewed in the vertical direction. The machining pallet 5 includes, for example, a frame 5a and multiple supporting plates 5b. The multiple supporting plates 5b are each in the form of a plate and are provided upright relative to the frame 5a. The multiple supporting plates 5b each extend in the Y direction and are arranged at predetermined intervals in the X direction. The multiple supporting plates 5b are arms that extend in the lengthwise direction in a plan view and are arranged parallel to one another. The multiple supporting plates 5a each have an upper end formed in a saw-toothed shape. The multiple supporting plates 5a support the lower face of the workpiece W at multiple points (distal ends of the sawteeth). The machining pallet 5 is movable with the machining target workpieces, including the products Wa and remaining material Wb cut and separated by laser machining, placed on the multiple supporting plates 5b.

The pallet changer 6 is provided in the loading/unloading area AR2 and is arranged on the +X side relative to the machining tool 1. The pallet changer 6 exchanges the machining pallets 5 that are loaded into or unloaded from the machining tool 1. The pallet changer 6 also transfers the machining pallet 5 to the machining tool 1. The pallet changer 6 transports the machining pallet 5 along the rails 28, for example by pulling the machining pallet 5. For example, a hook connected to a wire is attached to the machining pallet 5, and the machining pallet 5 is pulled as the wire is wound onto a driver. The mechanism that causes the machining pallet 5 to move can be changed as appropriate, and the machining pallet 5 may be of a self-propelling type, for example.

The lifter 7 lifts the machining target workpieces placed on the machining pallet 5 from the machining pallet 5. The lifter 7 lifts at least one of the product Wa or the remaining material, which have been cut and separated by the machining tool 1 from the workpiece W.

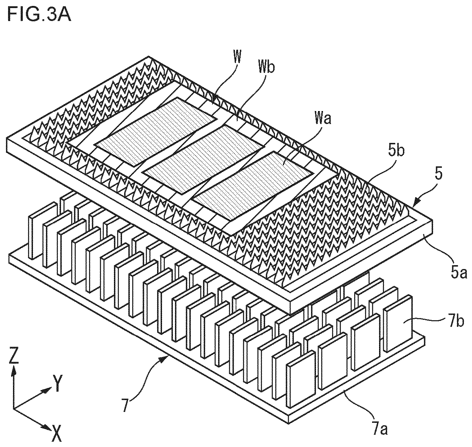

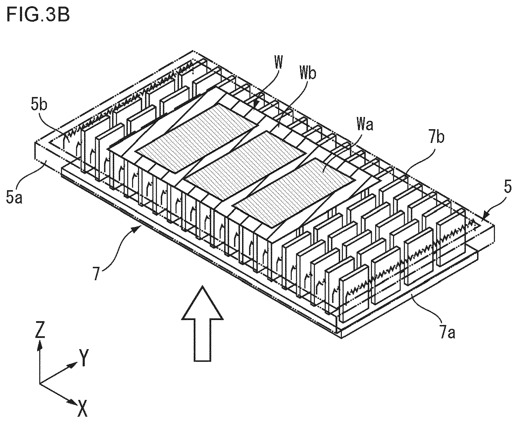

Fig. 3 shows an example of a machining pallet 5 and a lifter 7. Fig. 3A is a perspective view showing a state in which the workpiece W is supported by the machining pallet 5. Fig. 3B is a perspective view showing a state in which the workpiece W is supported by the lifter 7. As shown in Fig. 3, the lifter 7 includes a movable plate 8a and multiple arms 8b. The movable plate 8a is arranged directly below the machining pallet 5 when the machining pallet 5 is arranged in the loading/unloading area AR2 (see Fig. 1). The movable plate 8a can be moved in the vertical direction by a driver not shown in the drawings. The multiple arms 8b are each provided on the upper face of the movable plate 8a. The multiple arms 8b extend in the lengthwise direction (Y direction) and are arranged in multiple rows parallel to one another in a plan view.

Each arm 8b is, for example, of a plate shape and extends vertically upward from the upper face of the movable plate 8a. The arm 8b may be of a shape other than a plate shape, for example, a column shape. Each arm 8b is dimensioned and arranged so that it can be inserted between two adjacent supporting plates 5b on the machining pallet 5. The multiple arms 8b have their upper face positions (heights) aligned. As shown in Fig. 3A, when the lifter 7 ascends from the position below the machining pallet 5, as shown in Fig. 3B, the upper faces of the arms 8b protrudes upward beyond the supporting plate 5b, and the machining target workpieces are transferred from the machining pallet 5 to the lifter 7. In other words, the machining target workpieces are supported by the lifter 7 (arms 8b). The loader 3 picks up the products Wa supported by the arms 8b and transfers them onto the product pallet 13. The gripper 4 removes the remaining material Wb, which is supported by the arms 8b, from the machining pallet 5 and performs the remaining material discharge process, discharging the remaining material to the remaining material collector 10.

The transport control system 8 includes, for example, an illuminator 30, one or more imagers 31, a processor 32, and an extraction controller 33. In the example shown in Fig. 1 and Fig. 2, the transport control system 8 includes two imagers 31A, 31B. In cases where the imager 31A and the imager 31B are not distinguished from each other, they may simply be referred to as "imagers 31".

The illuminator 30 is arranged on one side of the lifter 7 in the horizontal direction. The illuminator 30 is arranged on one side of the machining pallet 5 arranged in the loading/unloading area AR2. In the present embodiment, the one side relative to the lifter 7 is the +X side of the lifter 7. As an example, the illuminator 30 is attached to the stocker 2. The illuminator 30 is arranged, for example, in an orientation (attitude) to illuminate a range including the entire upper face of the machining pallet 5 in the machining pallet AR2. For example, LED lighting is used for the illuminator 30. The light emitted from the illuminator 30 is, for example, visible light.

In the present embodiment, one illuminator 30 is used, however, two or more illuminators 30 may be used. The illuminator 30 may be of a configuration that continuously emits light or of a configuration that emits light intermittently. The illuminator 30 emits light that spreads to illuminate the entire upper face of the lifter 7, however, it is not limited to this configuration. For example, the illuminator 30 may be configured to emit (perform scanning with) light that spreads over a narrow range while changing its angle relative to the lifter 7 and the machining pallet 5 in a plan view, and thus, light may be emitted to illuminate the entire upper face of the lifter 7 and the machining pallet 5 at predetermined time cycles. In such a case, the illuminator 30 emits light for at least one cycle of time to cover the entire upper face of the lifter 7 and the machining pallet 5 while the imagers 31 are capturing an image.

The imagers 31 are arranged, for example, on the -X side of the machining pallet 5 arranged in the loading/unloading area AR2. The imagers 31 are attached to the machining tool 1, for example. For example, of the two imagers 31, the imager 31A is arranged on the +Y side in the Y direction, and the imager 31B is arranged on the -Y side in the Y direction.

The imagers 31 capture an image of the machining pallet 5. The imagers 31 have a field of view that can capture the machining target workpieces, including the products Wa and the remaining material Wb, on the machining pallet 5. In other words, the imagers 31 acquire a captured image in which all of the machining target workpieces on the machining pallet 5 are captured. The imagers 31 transmit the captured image to the processor 32. The captured image may be a still image or a video image. The machining target workpiece on the processing pallet 5 may be in a state of being placed on the machining pallet 5 or in a state of being lifted above the machining pallet 5 by the lifter 7. The imagers 31 are each capable of capturing light emitted from the illuminator 30 and reflected by the machining target workpieces on the machining pallet 5. In the present embodiment, the spacing in the Y direction between the imager 31A and the imager 31B is set so that the reflected light from the machining target workpieces can be captured from the edges of the upper face of the lifter 7.

The imagers 31 capture an image of the machining pallet 5 when the machining target workpieces on the machining pallet 5 are being extracted by the extractor (for example, the loader 3 or the gripper 4), thereby acquiring a captured image of the machining pallet 5. For example, when the extractor extracts the machining target workpieces on the machining pallet 5 one by one, the imagers 31 capture an image of the machining pallet 5 each time a machining target workpiece is extracted. As an example, when the product unloading process is performed after the remaining material discharge process, the imagers 31 first capture an image of the machining pallet 5 before the remaining material discharge process is performed, that is, before the remaining material Wb is extracted by the gripper 4. In the product unloading process, when the loader 3 extracts products Wa from the machining pallet 5 one by one, the imagers 31 capture an image each time a product Wa is extracted. The imagers 31 further capture an image of the machining pallet 5 after both the remaining material discharge process and the product unloading process have been performed.

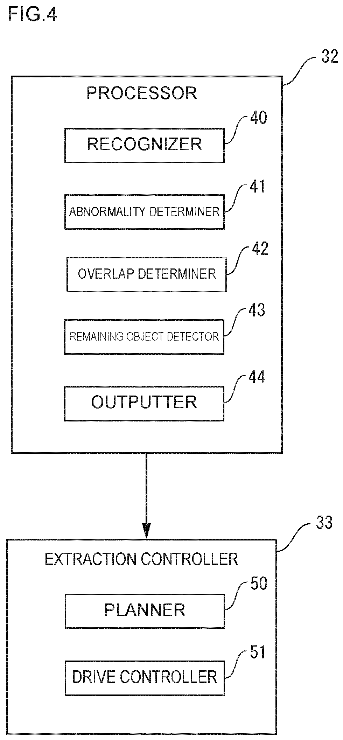

The processor 32 is connected to each of the imagers 31A, 31B via a wired or wireless connection. The processor 32 is connected to the illuminator 30 via a wired or wireless connection. The processor 32 is connected to the extraction controller 33 via a wired or wireless connection. Fig. 4 is a schematic configuration diagram of the processor 32 and the extraction controller 33 according to the present embodiment. As shown in Fig. 4, the processor 32 includes, for example, a recognizer 40, an abnormality determiner 41, an overlap determiner 42, a remaining object detector 43, and an outputter 44. These configuration components are implemented, for example, by a hardware processor such as a CPU (Central Processing Unit) executing a program (software). Moreover, some or all of these configuration components may be implemented by hardware (including circuitry) such as an LSI (Large Scale Integrated circuit), an ASIC (Application Specific Integrated Circuit), an FPGA (Field-Programmable Gate Array), or a GPU (Graphics Processing Unit), or may be implemented by a combination of software and hardware. The program may be stored in advance in a memory storage such as an HDD (Hard Disk Drive) or flash memory (a storage device with a non-transient storage medium), or in a removable storage medium such as a DVD or CD-ROM (a non-transient storage medium), and may be installed in the memory storage by mounting the storage medium in a drive device. The memory storage is composed of, for example, an HDD, flash memory, EEPROM (Electrically Erasable Programmable Read Only Memory), ROM (Read Only Memory), or RAM (Random Access Memory).

The processor 32 performs various processes, such as recognizing the machining target workpieces on the machining pallet 5 and determining the presence or absence of abnormalities, based on the images captured by the imagers 31. In such a case, the captured image from the imagers 31 may be an image from the imager 31A, an image from the imager 31B, or both. The processor 32 may generate a new single image using the images from the imager 31A and the imager 31B and may perform the processes described later (for example, machining target workpiece recognition, abnormality determination, overlap determination, and remaining object determination) using the generated image.

The recognizer 40 acquires the image captured by the imagers 31. The recognizer 40 recognizes each of the machining target workpieces on the machining pallet 5 based on the acquired captured image. The recognizer 40 then detects the position information of each recognized machining target workpiece. The position information includes at least one of the following: the position in one direction parallel to the horizontal plane (hereinafter referred to as "X-direction position"); the position in a direction orthogonal to the one direction and parallel to the horizontal plane (hereinafter referred to as "Y-direction position"); and the position in a direction around the vertical axis (hereinafter referred to as the "arrangement angle") θ. The X-direction position and the Y-direction position indicate the distance from a reference arbitrarily set in the XY coordinate system (hereinafter referred to as the "layout reference") to the reference position Pa of each product Wa or the reference position Ps of the remaining material Wb. The arrangement angle θ is the angle that determines the coordinates, orientation, and so forth for arranging the product or remaining material. For example, the arrangement angle θ is the arrangement angle of the product or remaining material relative to a reference straight line along the Y-direction.

For example, the recognizer 40 recognizes each machining target workpiece shown in the captured image acquired from the imagers 31 based on design information of the machining target workpieces. For example, the recognizer 40 recognizes the product Wa and the remaining material Wb from the captured image by pattern matching based on the design shapes of the product Wa and the remaining material Wb, which are the machining target workpieces. However, the invention is not limited to this example, and the recognizer 40 can use other commonly known image recognition methods other than pattern matching, such as template matching, as a method for recognizing the product Wa and remaining material Wb.

The design information includes the design values of shape information (hereinafter referred to as the "design shape") and the design values of position information (hereinafter referred to as the "design position") of each product Wa and remaining material Wb on the machining pallet 5. The design information may, for example, be nesting data in which multiple products Wa are allocated to the workpiece W. The nesting data is, for example, layout data for cutting multiple products from a workpiece W and includes the design shapes and design positions of the products Wa and the remaining material Wb.

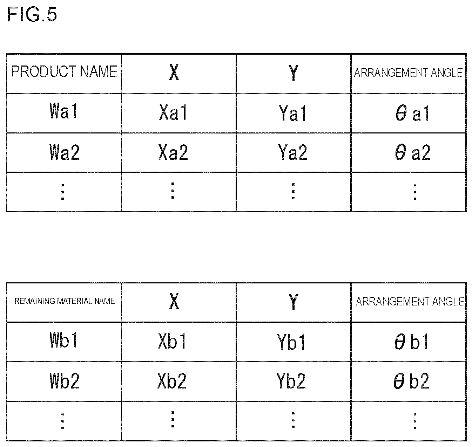

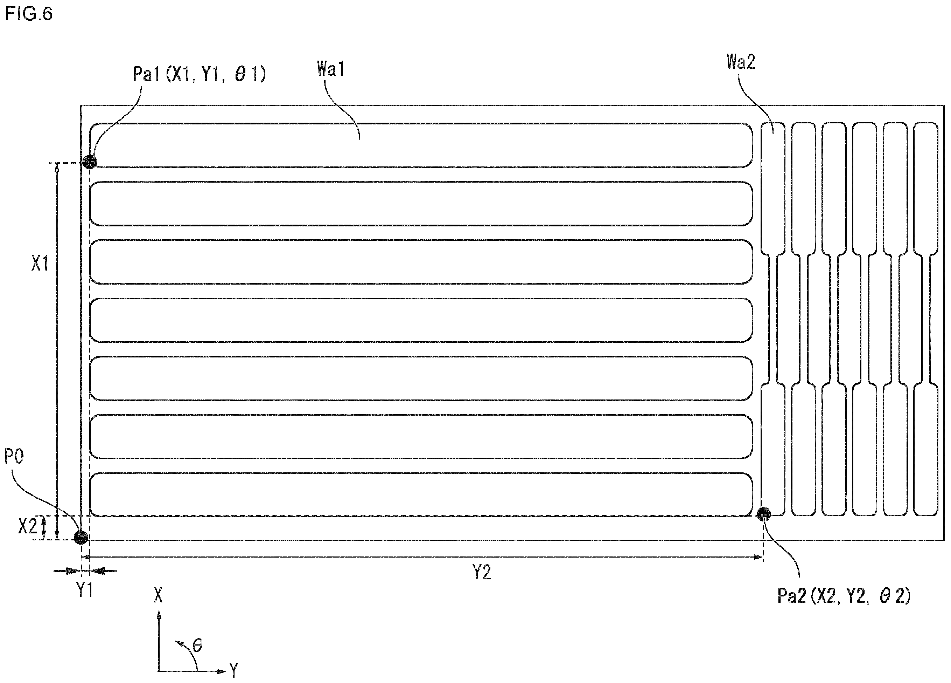

Fig. 5 is a diagram showing an example of design positions. Fig. 6 is a diagram showing an example of layout data according to the present embodiment. Here, a design position consists of design values for an X-direction position, Y-direction position, and arrangement angle θ. For example, the design information includes a design position, in which an X-direction position, a Y-direction position, and an arrangement angle θ are associated with each product Wa. The design information also includes the design position (for example, X-direction position, Y-direction position, and arrangement angle) of the remaining material Wb.

For example, as the design position of a product Wa1, an X-direction position X1, a Y-direction position Y1, and an arrangement coordinate θ1 are associated with each other. The X-direction position X1 is the distance in the X direction from the layout reference position P0 to the reference position Pa1 of the product Wa1. The Y-direction position Y1 is the distance in the Y direction from the layout reference position P0 to the reference position Pa1. For example, as the design position of a product Wa2, an X-direction position X2, a Y-direction position Y2, and an arrangement coordinate θ2 are associated with each other. The X-direction position X2 is the distance in the X direction from the layout reference position P0 to the reference position Pa2 of the product Wa2. The Y-direction position Y2 is the distance in the Y direction from the layout reference position P0 to the reference position Pa2. For example, as the design position of a remaining material Wb1, an X-direction position Xb1, a Y-direction position Yb1, and an arrangement coordinate θb1 are associated with each other. For example, as the design position of a remaining material Wb2, an X-direction position Xb2, a Y-direction position Yb2, and an arrangement coordinate θb2 are associated with each other.

The abnormality determiner 41 determines the presence or absence of an abnormality based on a captured image of the machining pallet 5 captured by the imagers 31. Specifically, the abnormality determiner 41 determines the presence or absence of an abnormality based on a captured image of machining target workpieces cut and separated by the machining tool 1. The machining target workpieces may include the product Wa and the remaining material Wb, or may be either the product Wa or the remaining material Wb. For example, the abnormality determiner 41 determines whether or not the position of each machining target workpiece recognized by the recognizer 40 deviates from its proper position. The abnormality determiner 41 determines an abnormality if the position of one or more machining target workpieces deviate from their proper position.

When the product unloading process is performed after the remaining material discharge process, the abnormality determiner 41 acquires an image of the machining pallet 5 from the imagers 31 before the product unloading process, that is, before the remaining material Wb is extracted by the gripper 4. This captured image shows all of the products Wa cut and separated by the machining tool 1 and the remaining material Wb. The abnormality determiner 41 determines, based on the captured image, whether or not the positions of the multiple products Wa and the remaining material Wb on the machining pallet 5 deviate from their proper positions. The abnormality determiner 41 determines an abnormality if the position of one or more machining target workpieces (products Wa or remaining material Wb) deviate from their proper positions. In the product unloading process, the abnormality determiner 41 acquires a captured image of the machining pallet 5 from the imagers 31 every time the loader 3 extracts the product Wa. The abnormality determiner 41 determines, based on the captured image, whether or not the positions of the multiple products Wa on the machining pallet 5 deviate from their proper positions.

More specifically, the abnormality determiner 41 calculates a positional deviation amount Δd1, which is the difference between the recognized position of the product Wa in the captured image and its corresponding design position. If the calculated positional deviation amount Δd1 is within a first allowable range, the abnormality determiner 41 determines that the product Wa is at its proper position. In other words, the abnormality determiner 41 determines that the position of the product Wa is normal if the positional deviation amount Δd1 is within the first allowable range.

The positional deviation amount Δd1 may be, for example, the difference in at least one of the X-direction position, Y-direction position, or arrangement angle. However, it is preferable that it includes the differences in all of the X-direction position, Y-direction position, and arrangement angle. For example, an allowable range is set for each of the X-direction position, the Y-direction position, and the arrangement angle. The abnormality determiner 41 calculates the difference ΔPx1 between the position of the product Wa in the X direction recognized from a first captured image and the position in the X direction corresponding to the product Wa. The abnormality determiner 41 calculates the difference ΔPy1 between the position of the product Wa in the Y direction recognized from the first captured image and the position in the Y direction corresponding to the product Wa. The abnormality determiner 41 calculates the difference Δθ1 between the arrangement angle of the product Wa recognized from the first captured image and the arrangement angle corresponding to that product Wa.

If the difference ΔPx1, the difference ΔPy1, and the difference Δθ1 are all within the first allowable range, the abnormality determiner 41 determines that the product Wa is at its proper position. On the other hand, if at least one of the difference ΔPx1, the difference ΔPy1, and the difference Δθ1 is outside the first allowable range, the abnormality determiner 41 determines that the product Wa is not at its proper position.

Similarly, the abnormality determiner 41 determines whether or not the position of the remaining material Wb, recognized from the captured image, is at its proper position on the machining pallet 5. For example, the abnormality determiner 41 compares the position of the remaining material Wb, recognized from the captured image, with the design position corresponding to that remaining material Wb, and determines whether or not the remaining material Wb is normal, based on the comparison result. More specifically, the abnormality determiner 41 calculates a positional deviation amount Δd2, which is the difference between the recognized position of the remaining material Wb in the captured image and its corresponding design position. If the calculated positional deviation amount Δd2 is within a second allowable range, the abnormality determiner 41 determines that the remaining material Wb is at its proper position. In other words, the abnormality determiner 41 determines that the position of the remaining material Wb is normal if the positional deviation amount Δd2 is within the second allowable range.

The positional deviation amount Δd2 may be, for example, the difference in at least one of the X-direction position, Y-direction position, or arrangement angle. However, it is preferable that it includes the differences in all of the X-direction position, Y-direction position, and arrangement angle. For example, the abnormality determiner 41 calculates the difference ΔPx2 between the position of the remaining material Wb in the X direction recognized from the captured image and the position in the X direction corresponding to the remaining material Wb. The abnormality determiner 41 calculates the difference ΔPy2 between the position of the remaining material Wb in the Y direction recognized from the captured image and the position in the Y direction corresponding to the remaining material Wb. The abnormality determiner 41 calculates the difference Δθ2 between the arrangement angle of the remaining material Wb recognized from the captured image and the arrangement angle corresponding to that remaining material Wb. If the difference ΔPx2, the difference ΔPy2, and the difference Δθ2 are all within the second allowable range, the abnormality determiner 41 determines that the remaining material Wb is at its proper position. On the other hand, if at least one of the difference ΔPx2, the difference ΔPy2, and the difference Δθ2 is outside the second allowable range, the abnormality determiner 41 determines that the remaining material Wb is not at its proper position.

The overlap determiner 42, if an abnormality is determined by the abnormality determiner 41, that is, if it is determined that the position of a machining target workpiece deviates from its proper position, performs an overlap determination to determine whether or not there is any overlap of machining target workpieces. Here, the case where there is an overlap of machining target workpieces includes those cases where there is at least a partial overlap of machining target workpieces. For example, the overlap determiner 42 determines an overlap of machining target workpieces if the entire or a part of the edges (contour) of a machining target workpiece cannot be detected on the captured image recognized by the recognizer 40. In other words, if the entire or a part of the edges (contour) of a machining target workpiece cannot be detected, the overlap determiner 42 determines that another machining target workpiece is overlapping the machining target workpiece. If an overlap of the machining target workpieces is determined, the overlap determiner 42 distinguishes the identification information of the machining target workpiece whose edges could not be entirely or partially detected from the identification information of the machining target workpiece overlapping this machining target workpiece.

The remaining object detector 43 acquires from the imagers 31 a capture image of the machining pallet 5 after the remaining material discharge process and the product unloading process. The remaining object detector 43 performs a remaining object determination to determine whether or not any remaining object remains on the machining pallet 5, based on the acquired captured image. For example, the remaining object detector 43 determines the presence or absence of a remaining object by comparing a reference image acquired in advance with the captured image acquired from the imagers 31. The reference image is an image obtained by the imagers 31 capturing the state where no machining target workpiece is placed on the machining pallet 5. In the case where the transport control system 8 includes two imagers 31A, 31B, reference images corresponding to each of the imagers 31A, 31B are used.

The outputter 44 outputs data obtained by the processes performed by the recognizer 40, the abnormality determiner 41, the overlap determiner 42, and the remaining object detector 43 to the extraction controller 33. For example, the outputter 44 outputs the position information of each machining target workpiece recognized by the recognizer 40 to the extraction controller 33. As an example, the outputter 44 outputs to the extraction controller 33 information (hereinafter referred to as "recognition result") in which the identification information and the position information of each machining target workpiece on the machining pallet 5 recognized by the recognizer 40 are associated with each other. The identification information may be the identification number or name of the machining target workpiece. The outputter 44 outputs the determination result of the abnormality determiner 41 to the extraction controller 33. For example, if the abnormality determiner 41 determines an abnormality, the outputter 44 outputs to the extraction controller 33 information, as an abnormality determination result, including the identification information of the machining target workpiece, the positional deviation amount of the machining target workpiece, and the overlap determination result. In the overlap determination, if an overlap of machining target workpieces is determined, the determination result includes the identification information of the machining target workpiece whose edges could not be detected partially or entirely, and the identification information of another machining target workpiece overlapping this machining target workpiece. If the remaining object detector 43 detects a remaining object, the outputter 44 outputs information including the position of the remaining object to the extraction controller 33.

The extraction controller 33 comprehensively controls the machining tool 1. The extraction controller 33 controls the operations of the machining tool 1, the stocker 2, the loader 3, the gripper 4, the machining pallet 5, the palette changer 6, and the lifter 7. The extraction controller 33 controls the operation of each unit, for example, by reading a predetermined program and data stored in a memory storage not shown in the drawings or based on a program and data transmitted from a host device.

The extraction controller 33 controls the gripper 4 to execute the remaining material discharge process. The extraction controller 33 controls the loader 3 to execute the product unloading process. In other words, the extraction controller 33 controls the operations of the loader 3 and the gripper 4 to sequentially extract the machining target workpieces on the machining pallet 5 in accordance with an extraction order. The extraction order defines the order in which the machining target workpieces are extracted from the machining pallet 5 by the extractor (the loader 3 and the gripper 4). In other words, the order in which the machining target workpieces set as extraction targets among the multiple machining target workpieces on the machining pallet 5 are extracted is preliminarily set as the extraction order. An example of the configuration of the extraction controller 33 will be described below.

The extraction controller 33 includes, for example, a planner 50 and a drive controller 51.

The planner 50 determines control information required to extract extraction targets in an extraction order. The control information is, for example, at least one of the position and the attitude of the extractor when the extractor extracts an extraction target. For example, in the planner 50, information on at least one of the position and the attitude of the extractor when extracting a machining target workpiece (hereinafter referred to as "control information") is preliminarily set for each machining target workpiece on the machining pallet 5. The control information set initially is at least one of the position and the attitude of the extractor when extracting the extraction target, in a state where there is no positional deviation of the extraction target. The control information set initially is set in advance based on the design information, for example. The positional deviation refers to those cases where a machining target workpiece deviates from its proper position.

If the extraction target is at its proper position, the planner 50 outputs to the drive controller 51 an extraction instruction including the control information set initially. On the other hand, if the extraction target deviates from its proper position, the planner 50 changes the control information of the extraction target based on the positional deviation amount. In other words, if the extraction target deviates from its proper position, the planner 50 changes the initially set control information to control information that takes into account the positional deviation amount, so that the extraction target can be extracted. For example, if there is a positional deviation in the extraction target, the planner 50 changes the control information of the extraction target by adding the positional deviation amount (for example, difference ΔPx, difference ΔPy) to the initially set control information (for example, X-coordinate position, Y-coordinate position). The planner 50 outputs to the drive controller 51 an extraction instruction including the control information that has been changed.

Here, during the transportation of the machining pallet 5 or the extraction of the machining target workpiece, the machining target workpiece on the machining pallet 5 may deviate from its proper position, and there may be cases where the machining target workpiece overlaps with another machining target workpiece. In such a case, for example, if the extraction target is positioned below a machining target workpiece, extraction of the extraction target may be difficult. Therefore, the planner 50 may change the extraction order if there is an overlap of machining target workpieces. As an example, if the position of a machining target workpiece on the machining pallet 5 deviates from its proper position and there is an overlap of machining target workpieces, the planner 50 may change the extraction order so that the machining target workpiece at the top of overlapping machining target workpieces is extracted first. In such a case, the planner 50 determines the control information of the extraction target after changing the extraction order and outputs to the drive controller 51 an extraction instruction including the determined control information. Based on the result of the overlap determination, the planner 50 can detect an overlap of machining target workpieces and identify the overlapping machining target workpiece.

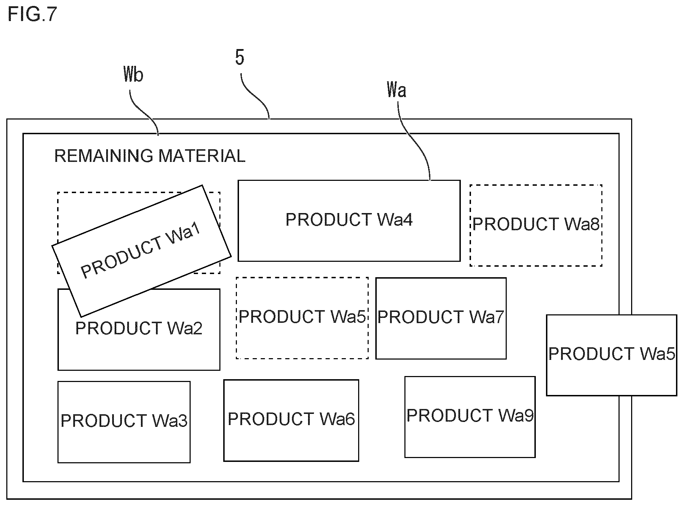

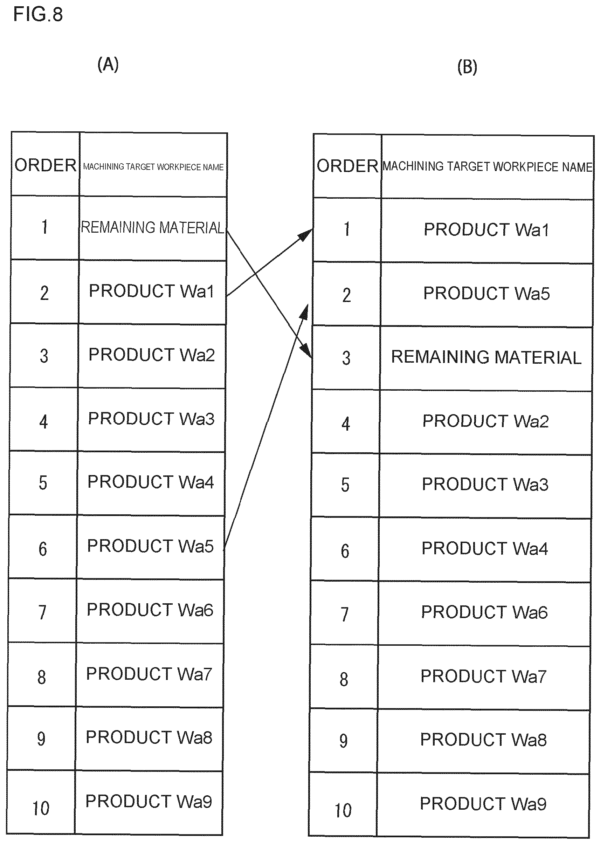

An example of changing the extraction order will be described. Fig. 7 is a diagram showing a schematic example of a captured image captured when imaging machining target workpieces on the machining pallet 5. Fig. 8 shows an example of an extraction order when extracting machining target workpieces shown in Fig. 7. Fig. 8 (A) shows an example of the extraction order that is initially set. Fig. 8 (B) shows an example of the extraction order that has been changed.

The imagers 31 capture an image of the machining target workpieces on the machining pallet 5 to acquire the captured image shown in Fig. 7. The processor 32 recognizes each of the products Wa1 to Wa9 in the captured image shown in Fig. 7 and also recognizes the remaining material Wb. In the example shown in Fig. 7, the product Wa1 deviates from its proper position and is overlapping the product Wa2 and the remaining material Wb. The product Wa5 deviates from its proper position and is overlapping the remaining material Wb. The product Wa8 is not present on the machining pallet 5 because it has not been machined by the machining tool 1 for some reason. In such a case, the planner 50 changes the initially set extraction order so as to prioritize extracting the overlapping machining target workpieces, namely, the product Wa1 and the product Wa5.

For example, the planner 50 changes the extraction order shown in Fig. 8 (A) to the extraction order shown in Fig. 8 (B). Specifically, the initial setting specifies that the products Wa1 to Wa9 will be extracted after extracting the remaining material Wb. However, the planner 50 changes the extraction order so as to extract the product Wa1 and the product Wa5 before extracting the remaining material Wb. There is no particular limitation as to which of the product Wa1 and the product Wa5 will be extracted first. However, since the initial setting specifies that the product Wa1 will be extracted before the product Wa5, the planner 50 changes the extraction order so as to first extract the product Wa1, then the product Wa5, followed by the remaining material Wb. In the extraction order that has been changed, the order of the machining target workpieces in their proper positions is set according to the order defined by the initial setting. Since the product Wa8 does not actually exist, the planner 50 sets the extraction of the product Wa8 to be skipped. For example, in the extraction order that has been changed, the planner 50 invalidates the extraction of the ninth product, that is, the product Wa8, and sets the extraction order so that the product Wa9 will be extracted after the product Wa7 has been extracted.

Upon receiving from the planner 50 an instruction to extract the extraction target, the drive controller 51 controls the extractor to extract the extraction target. For example, the drive controller 51 receives an extraction instruction. The drive controller 51 controls at least one of the position and the attitude of the extractor so that it matches the position and attitud included in the control information of the extraction instruction. As a result, the remaining material discharge process and the product unloading process are executed.

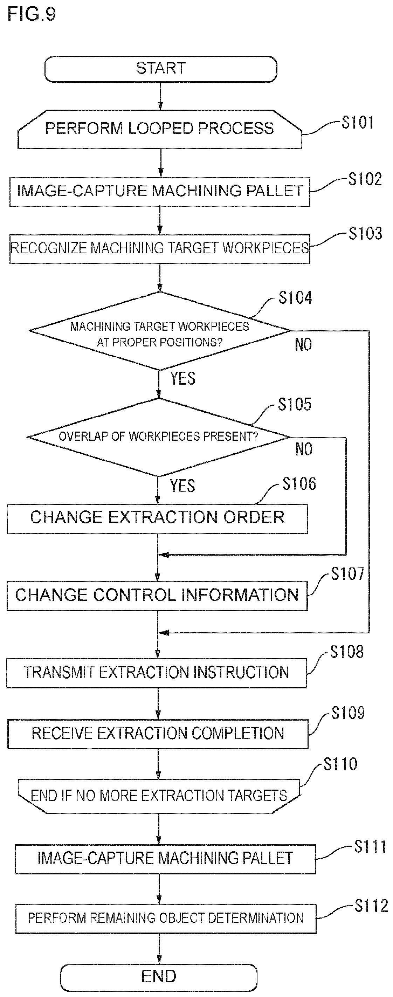

Hereinafter, the flow of the machining target workpiece extraction process in the present embodiment will be described with reference to Fig. 9. Fig. 9 is a flowchart showing an example of the extraction process according to the present embodiment.

Once the machining pallet 5, with an unmachined workpiece W placed thereon, is loaded into the machining tool 1, the machining tool 1 performs machining on the workpiece W on the machining pallet 5 to cut and separate it into products Wa and a remaining material Wb. The machining target workpieces, including the products Wa cut and separated by the machining tool 1 and the remaining material Wb, are placed on the machining pallet 5 and unloaded from the machining tool 1 to the loading/unloading area AR2. In other words, the machining pallet 5, with the machining target workpieces including the products Wa and the remaining material Wb placed thereon, is unloaded from the machining tool 1 to the loading/unloading area AR2. Once the machining pallet 5 is unloaded to the loading/unloading area AR2, Step S101 to Step S110 are initiated. In other words, the processes from Step S102 to Step S109 (extraction process) are performed until there are no extraction targets left.

For example, the extraction controller 33 transmits an image capturing instruction to the processor 32. This image capturing instruction includes design information of the machining target workpieces. Upon receiving the image capturing instruction, the processor 32 controls the illuminator 30 to emit light onto the machining pallet 5 with the machining target workpieces placed thereon and causes the imagers 31 to capture an image of the machining target workpieces on the machining pallet 5 (Step S102). For example, the processor 32 may acquire an image by having the imagers 31 capture the machining target workpieces in a state of being lifted from the machining pallet 5 by the lifter 7, or by having the imagers 31 capture the machining target workpieces in a state of being placed on the machining pallet 5.

The processor 32 recognizes the shapes and positions of the machining target workpieces on the machining pallet 5 based on the acquired captured image and the design information included in the image capturing instruction (Step S103). Then, the processor 32 determines whether or not each of the recognized machining target workpieces deviates from its proper position (Step S104). Here, since the products Wa and the remaining material Wb on the machining pallet 5 are cut and separated, the product Wa and the remaining material Wb may both deviate from their proper positions. For example, examples of factors that may cause the product Wa or the remaining material Wb to deviate from its proper position include vibrations during palette movement, interference between the nozzle and the machining target workpiece (product Wa or remaining material Wb) during cutting, tilting of the machining target workpiece due to gas ejection, or scattering of the machining target workpieces caused by gas ejection. In such cases, the loader 3 may not be able to properly extract the product Wa from the machining pallet 5, and the gripper 4 may not be able to properly extract the remaining material Wb, which may result in reduced machining efficiency. Thus, from the perspective of suppressing a decline in machining efficiency, it is crucial to determine whether or not the products Wa and the remaining material Wb on the machining pallet 5 are in their proper positions. That is to say, in the present embodiment, the processor 32 can suppress a decline in machining efficiency by determining whether the machining target workpieces are at their proper positions.

If the recognized machining target workpieces, that is, each of the machining target workpieces on the machining pallet 5 is determined as not deviating from their proper positions, the processor 32 determines them as being normal and outputs this determination result to the extraction controller 33. On the other hand, if one or more machining target workpieces on the machining pallet 5 deviate from their proper positions, the processor 32 determines an abnormality. If a machining target workpiece deviates from its proper position, that is, if an abnormality is determined, the processor 32 determines whether or not there is an overlap of the machining target workpieces (Step S105).

If an overlap of the machining target workpieces is determined, the processor 32 outputs to the extraction controller 33 the abnormality determination result including information on the overlapping machining target workpiece and the recognition result recognized in Step S103. The information on the overlapping machining target workpiece includes identification information of the overlapping machining target workpiece and the positional deviation amount of the machining target workpiece. On the other hand, if no overlap of the machining target workpieces is determined, the processor 32 outputs to the extraction controller 33 the abnormality determination result indicating no overlapping and the recognition result recognized in Step S103.

The planner 50 can grasp, based on the abnormality determination result from the processor 32, whether or not there is an overlap of the machining target workpieces. If there is an overlap of the machining target workpieces, the planner 50 changes the extraction order to prioritize extracting the topmost overlapping machining target workpiece (Step S106). On the other hand, if there is no overlap of the machining target workpieces, the planner 50 does not change the extraction order and the process transitions to Step S107.

The planner 50 changes the control information of the extraction target that deviates from its proper position (Step S107). For example, the planner 50 changes the initially set control information to control information that takes into account the deviation amount, allowing for the extraction of the extraction target that deviates from its proper position. In such a case, the planner 50 transmits an extraction instruction including the changed control information to the drive controller 51 (Step S108). On the other hand, if, in Step S104, the extraction target is not deviating from its proper position, the planner 50 outputs to the drive controller 51 an extraction instruction including the control information set initially.

The drive controller 51 controls the extractor according to the extraction instruction to execute the extraction of the extraction target. Extraction of the extraction target refers to the product unloading process of the product Wa or the remaining material discharge process of the remaining material Wb. Once the extraction of the extraction target is completed, the drive controller 51 transmits a completion signal indicating this completion to the planner 50. Upon receiving the completion signal, the planner 50 transmits an image capturing instruction for the next extraction process to the processor. Thus, the processes of Step S102 to Step S110 are repeated until extraction of all extraction targets defined in the extraction order is completed.

When all of the extraction processes are completed, in other words, if the extraction controller 33 determines the remaining material discharge process and the product unloading process as being completed, the processor 32 causes the imagers 31 to capture an image of the machining pallet 5. Thereby, the processor 32 acquires a captured image of the machining pallet 5 after the remaining material discharge process and the product unloading process are completed (Step S111). Upon completion of the remaining material discharge process and the product unloading process, the remaining object detector 43 determines whether or not any remaining object is present on the machining pallet 5, based on the captured image acquired in Step S111 (Step S112).

Here, after the remaining material discharge process and the product unloading process are completed, typically, no products Wa or remaining material Wb remain on the machining pallet 5. However, due to some factors, it is possible that a missed extraction of the product Wa or remaining material Wb may occur. Therefore, in the present embodiment, the remaining object detector 43 determines whether or not there is any remaining object on the machining pallet 5 in Step S114. This allows for the detection of any missed extraction of product Wa or remaining material Wb. If any remaining object is determined as being present by the remaining object detector 43, the extraction controller 33 may acquire information on the remaining object from the remaining object detector 43 and control the extractor to extract the remaining object using the extractor. For example, if there is a remaining object and the remaining object is a product Wa, the extraction controller 33 may receive information on the remaining object and, based on the received information, cause the loader 3 to unload the remaining object. If there is a remaining object and the remaining object is a remaining material Wb, the extraction controller 33 may receive this information, and, based on the received information, cause the gripper 4 to discharge the remaining object.

In determining the presence or absence of an abnormality, the abnormality determiner 41 may also determine whether or not there is any foreign matter on the machining target workpieces. Here, in a case where the machining system PS is provided with a remover that removes foreign matter from the machining target workpiece, if a foreign matter is determined on the machining target workpiece, the abnormality determiner 41 notifies the extraction controller 33 of the result of the foreign matter determination and the position of the foreign matter. When such a notification is received, the extraction controller 33 may cause the remover to remove the foreign matter by transmitting to the remover an instruction signal including the position of the foreign matter.

In the machining system PS to which the transport control system 8 is applied, the arrangement positions of the machining tool 1, the stocker 2, the loader 3, the gripper 4, the machining pallet 5, the palette changer 6, and the lifter 7 can be changed arbitrarily and are not limited to the arrangement positions mentioned above. For example, in the example shown in Fig. 1 and Fig. 2, the workpiece W is transported from the +X direction to the machining tool 1, However, the invention is not limited to this example, and the workpiece W may be transported from the -X direction to the machining tool 1.

In executing the extraction process shown in Fig. 9, for example, the processor 32 applies various types of image processing to the captured image of the machining pallet 5 to recognize the shapes, positions, overlap, and so forth of the machining target workpieces. Here, this image processing may include, for example, processing for detecting at least either edges or shades. The image processing may also include a correction process of correcting distortion of the machining target workpieces in the captured image. For example, the correction process may include a process of correcting the captured image obtained from the imagers 31, which is an image of the machining target workpieces captured from an oblique angle, so that the image appears as one captured from directly above the machining target workpieces.

The above embodiment discloses the following configurations.

### Configuration 1

A transport control system comprising
an imager 31 that captures an image of a machining pallet 5 on which machined workpieces, cut and separated by a machining tool 1, are placed, and
a processor 32 that determines a presence or absence of an abnormality based a captured image captured by the imager 31,
wherein the processor 32 acquires the captured image including a product Wa and a remaining material Wb as the machining target workpieces from the imager 31 and determines an abnormality if a position of one of the machining target workpieces in the captured image deviates from its proper position.

### Configuration 2

The transport control system according to configuration 1, comprising
an extraction controller 33 that controls an extractor (loader 3, gripper 4) that extracts the machining target workpiece on the machining pallet 5 as an extraction target,
wherein if the processor 32 determines that a position of the extraction target deviates from the proper position, the extraction controller 33 changes at least one of a position and attitude of the extractor during extraction of the extraction target, according to a deviation amount of the position of the extraction target.

### Configuration 3

The transport control system according to configuration 1, comprising
an extraction controller 33 that controls an extractor (loader 3, gripper 4) that sequentially extracts the machining target workpieces on the machining pallet 5 in accordance with an extraction order,
wherein the extraction controller 33 changes the extraction order if the position of the machining target workpiece deviates from the proper position.

### Configuration 4

The transport control system according to configuration 2 or 3,
wherein if the position of the machining target workpiece deviates from the proper position and there is an overlap of the machining target workpieces, the extraction controller 33 changes the extraction order so that the machined workpiece at a top of the machining target workpieces that are overlapping is extracted first.

### Configuration 5

The transport control system according to configuration 3 or 4,
wherein the extraction order of an initial stage may be defined such that the remaining material is extracted first, followed by the product, and
wherein if at least a portion of the product Wa overlaps with the remaining material Wb, the extraction controller 33 changes the extraction order of the initial stage so that the product Wa is extracted before the remaining material.

### Configuration 6

The transport control system according to any one of configurations 2 to 4,
wherein the imager 31 captures an image of the machining pallet 5 each time the product is extracted by the transporter, and
wherein the extraction controller 33 determines whether the products Wa are overlapping each time the product Wa is extracted, and if there is an overlap of the products Wa, changes the extraction order so that the product Wa at a top of the overlap is extracted first.

One or more of the requirements described in the above embodiment may be omitted in some cases. Furthermore, one or more of the requirements described in the above embodiment may be combined where appropriate. The order of executing procedures shown in the present embodiment can be implemented in an arbitrary order unless the result of the previous procedure is used in the following procedure. While operations in the above embodiment have been described with expressions such as "first", "next", and "subsequently" for the sake of convenience, the operations need not always be implemented in that order. The contents of Japanese Patent Application No. 2022-177226 and all documents cited in the detailed description of the present invention are incorporated herein by reference to the extent permitted by law.

### Description of Reference Signs

- W:: Workpiece
- Wa:: Product
- Wb:: remaining material
- PS:: Machining system
- 1:: Machining tool
- 2:: Stocker
- 3:: Loader (extractor)
- 4:: Gripper (extractor)
- 5:: Machining pallet
- 6:: Pallet changer
- 7:: Lifter
- 10:: Transport control system
- 30:: Illuminator
- 31:: Imager
- 32:: Processor
- 33:: Extraction controller

## Claims

1. A transport control system comprising
an imager that captures an image of a pallet on which machining target workpieces, cut and separated by a machining tool, are placed, and
a processor that determines a presence or absence of an abnormality based a captured image captured by the imager,
wherein the processor acquires the captured image including a product and a remaining material as the machining target workpieces from the imager and determines an abnormality if a position of one of the machining target workpieces in the captured image deviates from a proper position.

2. The transport control system according to claim 1, comprising
an extraction controller that controls an extractor that extracts the machining target workpiece on the pallet as an extraction target,
wherein if the processor determines that a position of the extraction target deviates from the proper position, the extraction controller changes at least one of a position and attitude of the extractor during extraction of the extraction target, according to a deviation amount of the position of the extraction target.

3. The transport control system according to claim 1, comprising
an extraction controller that controls an extractor that sequentially extracts the machining target workpieces on the pallet in accordance with an extraction order,
wherein the extraction controller changes the extraction order if the position of the machining target workpiece deviates from the proper position.

4. The transport control system according to claim 3,
wherein if the position of the machining target workpiece deviates from the proper position and there is an overlap of the machining target workpieces, the extraction controller changes the extraction order so that the machined workpiece at a top of the machining target workpieces that are overlapping is extracted first.

5. The transport control system according to claim 4,
wherein the extraction order of an initial stage is defined such that the remaining material is extracted first, followed by the product, and
wherein if at least a portion of the product overlaps with the remaining material, the extraction controller changes the extraction order of the initial stage so that the product is extracted before the remaining material.

6. The transport control system according to claim 4 or 5,
wherein the imager captures an image of the pallet each time the product is extracted by the extractor, and
wherein the extraction controller determines whether the products are overlapping each time the product is extracted, and if there is an overlap of the products, changes the extraction order so that the product at a top of the overlap is extracted first.

7. A determination method comprising
capturing an image of a pallet on which machined workpieces, cut and separated by a machining tool, are placed, and
acquiring the captured image including a product and a remaining material as the machining target workpieces from the imager, and determining an abnormality if a position of one of the machining target workpieces in the captured image deviates from a proper position.
